# EUROPÄISCHE PATENTSCHRIFT

(11) **EP 3 689 679 B1**
(45) Veröffentlichungstag und Bekanntmachung des Hinweises auf die Patenterteilung: **13.10.2021**
(21) Anmeldenummer: 20153333.8
(22) Anmeldetag: 23.01.2020
(51) Int. Cl.: F21S 41/60

(54) **BELEUCHTUNGSEINRICHTUNG FÜR EIN KRAFTFAHRZEUG UND VERFAHREN**
METHOD AND LIGHTING DEVICE FOR A MOTOR VEHICLE
DISPOSITIF D'ÉCLAIRAGE POUR UN VÉHICULE AUTOMOBILE ET PROCÉDÉ

(30) Priorität: 30.01.2019 DE 102019102327
(43) Veröffentlichungstag der Anmeldung: 05.08.2020
(73) Patentinhaber: Automotive Lighting Reutlingen GmbH, 72762 Reutlingen (DE)
(72) Erfinder: Baccarin, Davide, 72762 Reutlingen (DE); Schnerr, Michael, 70565 Stuttgart (DE); Welsner, Stefan, 72762 Reutlingen (DE)
(74) Vertreter: DREISS Patentanwälte PartG mbB

(56) Entgegenhaltungen:
- EP-A2- 1 433 655
- WO-A1-2016/021154
- WO-A1-2019/006481
- DE-A1-102011 109 434
- DE-A1-102013 019 021
- DE-A1-102016 122 066
- DE-A1-102017 005 019

## Beschreibung

Die Erfindung betrifft eine Beleuchtungseinrichtung für ein Kraftfahrzeug gemäß Patentanspruch 1. Ferner betrifft die Erfindung ein Verfahren gemäß Patentanspruch 9.

Aus DE 10 2017 005 019 A1 ist bereits eine Beleuchtungseinrichtung gemäß dem Oberbegriff von Patentanspruch 1 bekannt.

EP 1 433 655 A2 offenbart eine digitale Beleuchtungsvorrichtung für ein Kraftfahrzeug.

Seit 1998 schreibt ECE R48 vor, dass eine Veränderung der

Fahrzeugneigung um die Nickachse durch eine Veränderung der optischen Achse des Scheinwerfers kompensiert werden muss.

Darüber hinausgehend erfährt das Fahrzeug Fahrzeugvibrationen sowie weitere Lageveränderungen, womit eine Abstrahllichtverteilung eines Scheinwerfers in Bezug zur Fahrbahn destabilisiert wird.

Folglich besteht die Aufgabe der Erfindung darin, eine Beleuchtungseinrichtung dahingehend zu verbessern als dass die Abstrahllichtverteilung stabilisiert wird.

Die der Erfindung zugrunde liegende Aufgabe wird durch eine Beleuchtungseinrichtung für ein Kraftfahrzeug gemäß dem Anspruch 1 und ein Verfahren gemäß einem nebengeordneten Anspruch gelöst. Vorteilhafte Weiterbildungen sind in den Unteransprüchen sowie in der nachfolgenden Beschreibung zu finden.

Gemäß einem ersten Aspekt dieser Beschreibung wird eine Beleuchtungseinrichtung für ein Kraftfahrzeug beschrieben, wobei die Beleuchtungseinrichtung eine erste Berechnungseinheit, eine zweite Berechnungseinheit und eine Korrektureinheit umfasst. Die Beleuchtungseinrichtung ist so eingerichtet, dass die Beleuchtungseinrichtung einen ersten Bildstrom mit einer Bildrate in Abhängigkeit von ersten Fahrzeugdaten mittels der ersten Berechnungseinheit ermittelt, wenigstens einen Korrekturwert mit einer Korrekturrate, welche größer ist als die Bildrate, in Abhängigkeit von zweiten Fahrzeugdaten mittels der zweiten Berechnungseinheit ermittelt, und einen zweiten Bildstrom in Abhängigkeit von dem ermittelten ersten Bildstrom und in Abhängigkeit von dem wenigstens einen ermittelten Korrekturwert mittels der Korrektureinheit ermittelt. Die Beleuchtungseinrichtung umfasst eine Pixellichtanordnung, wobei die Beleuchtungseinrichtung so eingerichtet ist, dass die Beleuchtungseinrichtung eine Abstrahllichtverteilung in Abhängigkeit von dem zweiten Bildstrom mittels der Pixellichtanordnung von der Beleuchtungseinrichtung abstrahlt. Die Korrektureinheit selektiert einen Auswahlbereich innerhalb jeweiliger Einzelbilder des ersten Bildstromes in Abhängigkeit von dem Korrekturwert. Die selektierten Auswahlbereiche sind als jeweilige Einzelbilder des zweiten Bildstroms bereitstellt. Die Abhängigkeit des Auswahlbereichs von dem Korrekturwert ermöglicht die hochfrequente Ermittlung des zweiten Bildstroms. Darüber hinaus wird die Abstrahllichtverteilung in Abhängigkeit von dem Auswahlbereich erzeugt. Eine Bildauflösung des ersten Bildstroms ist größer als eine Bildauflösung des zweiten Bildstroms. Durch die unterschiedlichen Bildauflösungen wird die Ermittlung des zweiten Bildstroms vereinfacht. Beispielsweise kann eine Translation des zweiten Bildstromes gegenüber dem ersten Bildstrom durch pixelweises Verschieben auf einfache Art und Weise realisiert werden.

Beispielsweise kann auf diese Weise die in das Fahrzeugvorfeld projizierte Abstrahllichtverteilung durch die Berücksichtigung des Korrekturwerts stabilisiert werden. Selbstverständliche profitiert auch jede andere von der Beleuchtungseinrichtung abgestrahlte Lichtverteilung von dieser Art der Stabilisierung. Da der Korrekturwert mit einer höheren Korrekturrate zur Verfügung steht als Einzelbilder des ersten Bildstroms, wird die Aktualisierungsrate der abgestrahlten Lichtverteilung nicht mehr von der Bildrate begrenzt. Durch die erhöhte Korrekturrate treten Latenzen, die beispielsweise bei der Erzeugung und Zwischenpufferung des ersten Bildstroms auftreten, in den Hintergrund. Darüber hinaus entkoppelt die vorgeschlagene Lösung die Erzeugung des ersten Bildstroms von der Stabilisierung der Abstrahllichtverteilung. Vorteilhaft wird die Abstrahllichtverteilung mittels der gegenüber der Bildrate erhöhten Korrekturrate stabilisiert.

Ein vorteilhaftes Beispiel zeichnet sich dadurch aus, dass die Einzelbilder des ersten Bildstroms in einer vertikalen Ausdehnung eine erste Differenz zu einer vertikalen Ausdehnung des Auswahlbereichs aufweisen, wobei die Einzelbilder des ersten Bildstroms in einer horizontalen Ausdehnung eine zweite Differenz zu einer horizontalen Ausdehnung des Auswahlbereichs aufweisen, und wobei die erste Differenz größer ist als die zweite Differenz. Hierdurch wird vorteilhaft erreicht, dass ein größerer Bereich in vertikaler Richtung zur Kompensation von typischerweise auftretenden Nickbewegungen des Kraftfahrzeugs zur Verfügung steht.

Ein vorteilhaftes Beispiel zeichnet sich dadurch aus, dass die Einzelbilder des ersten Bildstroms in vertikaler Ausdehnung um 10 bis 25 % größer sind als der Auswahlbereich, und wobei die Bilder des ersten Bildstroms in horizontaler Ausdehnung um 2 bis 5 % größer sind als der Auswahlbereich. Vorteilhaft wird eine speichereffiziente Variante für die Erzeugung und Pufferung des ersten Bildstroms bei möglichst geringer Datenerhöhung des ersten Bildstroms bereitgestellt, die den Anforderungen an die Stabilität der Abstrahllichtverteilung genügt.

Ein vorteilhaftes Beispiel zeichnet sich dadurch aus, dass die Korrektureinheit zwischen einem Bildspeicher für den ersten Bildstrom und einer Treibereinheit der Pixellichtanordnung angeordnet ist. Vorteilhaft wird die Korrektur damit nahe an der Pixellichtanordnung vorgenommen, was die Latenz zwischen Korrektur und Abstrahlung der Abstrahllichtverteilung reduziert.

Ein vorteilhaftes Beispiel zeichnet sich dadurch aus, dass die Korrektureinheit zwischen einem Bildspeicher einer Steuereinheit und einer Datenausgangsschnittstelle der Steuereinheit angeordnet ist. Vorteilhaft wird die Korrektur an den Rand der Steuereinheit verlagert, womit die Latenzen innerhalb der Steuereinheit reduziert werden.

Ein vorteilhaftes Beispiel zeichnet sich dadurch aus, dass die zweite Berechnungseinheit einen Vorkorrekturwert ermittelt, und wobei die erste Berechnungseinheit den ersten Bildstrom in Abhängigkeit von dem Vorkorrekturwert ermittelt. Vorteilhaft kann der Vorkorrekturwert die Bildstabilität insbesondere bei niederfrequenten Änderungen der Fahrdynamik insoweit verbessern, als dass eine hochfrequente Korrektur mittels des Korrekturwerts die Stabilität der Abstrahllichtverteilung weiter erhöht. Darüber hinaus kann die Grobkorrektur mittels des Vorkorrekturwerts speichereffizient durchgeführt werden, da so die Größe der vorzuhaltenden Einzelbilder des ersten Bildstroms insbesondere die Bildspeichergröße reduziert werden kann.

Ein vorteilhaftes Beispiel zeichnet sich dadurch aus, dass die ersten Fahrzeugdaten wenigstens eine der folgenden Größen umfasst: eine Fahrzeuggeschwindigkeit, eine Fahrzeugbeschleunigung, Objektinformationen, Adative Driving Beam-Informationen, einen Lenkradwinkel, eine manuelle Vorgabe der Leuchtweite oder andere Fahrzeuginformationen. In den ersten Fahrzeugdaten sind somit die Informationen enthalten, welche zur Berechnung der Lichtverteilung oder des Bildes oder des Symbols dienen. Die ersten Fahrzeugdaten werden also dazu genutzt, um den Bildstrom zu erzeugen und spielen für die Stabilisierung zum Ende der Verarbeitung hin eine geringere Rolle.

Ein vorteilhaftes Beispiel zeichnet sich dadurch aus, dass die zweiten Fahrzeugdaten wenigstens eine der folgenden Größen umfasst: eine Winkelgeschwindigkeit, welche mittels eines Gyroskops oder mittels einer inertialen Messeinheit ermittelt wird, oder einen Winkel, welcher mittels des Gyrosops, der inertialen Messeinheit oder mittels Achssensoren ermittelt wird.

Ein zweiter Aspekt dieser Beschreibung betrifft ein Verfahren zum Betreiben einer Beleuchtungseinrichtung eines Kraftfahrzeugs, wobei das Verfahren umfasst: Ermitteln eines ersten Bildstroms mit einer Bildrate in Abhängigkeit von ersten Fahrzeugdaten mittels einer ersten Berechnungseinheit, Ermitteln wenigstens eines Korrekturwerts mit einer Korrekturrate, welche größer ist als die Bildrate, in Abhängigkeit von zweiten Fahrzeugdaten mittels einer zweiten Berechnungseinheit, Ermitteln eines zweiten Bildstroms in Abhängigkeit von dem ermittelten ersten Bildstrom und in Abhängigkeit von dem wenigstens einen ermittelten Korrekturwert mittels einer Korrektureinheit, und Abstrahlen einer Abstrahllichtverteilung in Abhängigkeit von dem zweiten Bildstrom mittels einer Pixellichtanordnung von der Beleuchtungseinrichtung, Selektieren eines Auswahlbereichs innerhalb jeweiliger Einzelbilder des ersten Bildstromes in Abhängigkeit von dem Korrekturwert und Bereitstellen des selektierten Auswahlbereichs als jeweilige Einzelbilder des zweiten Bildstroms. Eine Bildauflösung des ersten Bildstroms ist größer ist als eine Bildauflösung des zweiten Bildstroms.

In der Zeichnung zeigen:
- Figur 1: eine Beleuchtungseinrichtung in schematischer Form;
- Figur 2: ein Kraftfahrzeug in schematischer Form;
- Figuren 3-6: jeweils ein Beispiel für ein Pixellichtmodul und eine Steuereinheit;
- Figur 7: eine Arbeitsweise einer Korrektureinheit in schematischer Form; und
- Figur 8: ein schematisches Blockdiagramm zur Ermittlung eines Korrekturwerts.

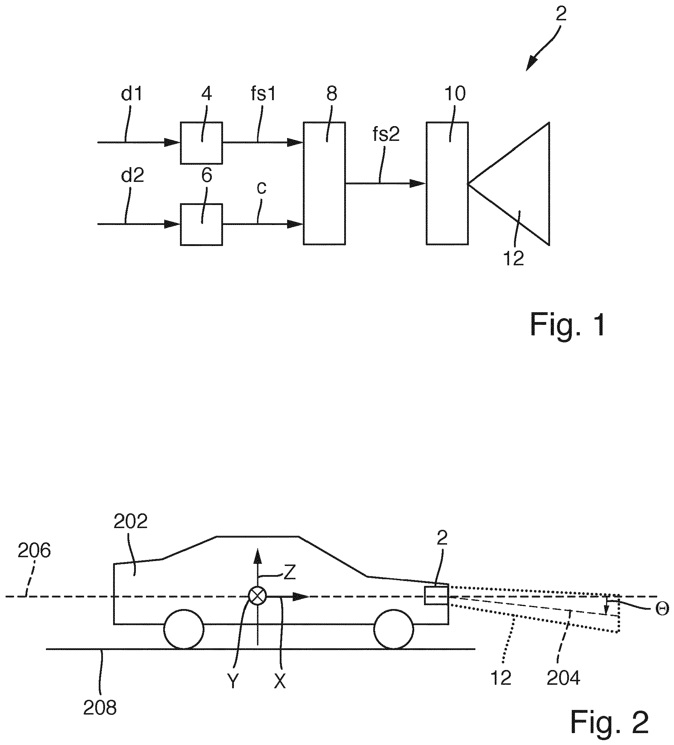

Figur 1 zeigt in schematischer Form eine Beleuchtungseinrichtung 2 für ein Kraftfahrzeug. Die Beleuchtungseinrichtung 2 umfasst eine erste Berechnungseinheit 4, eine zweite Berechnungseinheit 6, eine Korrektureinheit 8 sowie eine Pixellichtanordnung 10, von welcher eine Abstrahllichtverteilung 12 abgestrahlt wird. Die erste Berechnungseinheit 4 ermittelt in Abhängigkeit von ersten Fahrzeugdaten d1 einen ersten Bildstrom fs1. Die zweite Berechnungseinheit 6 ermittelt in Abhängigkeit von zweiten Fahrzeugdaten d2 wenigstens einen Korrekturwert c. Die Korrektureinheit 8 ermittelt einen zweiten Bildstrom fs2 in Abhängigkeit von dem ersten Bildstrom fs1 und in Abhängigkeit von den wenigstens einen Korrekturwert c und stellt diesen zweiten Bildstrom fs2 der Pixellichtanordnung 10 bereit. Die Pixellichtanordnung 10 strahlt in Abhängigkeit von dem bereitgestellten zweiten Bildstrom fs2 die Abstrahllichtverteilung 12 von der Beleuchtungseinrichtung 2 ab. Bei der Abstrahllichtverteilung 12 handelt es sich beispielsweise um eine Abblendlichtverteilung, eine Fernlichtverteilung, ein auf die Fahrbahn projiziertes Symbol bzw. Bild bzw. ein auf die Fahrbahn projiziertes Video.

Der Korrekturwert c wird mit einer Frequenz größer 1 Hz ermittelt, um die Verarbeitungszeiten für die Erzeugung und den Transport des ersten Bildstroms fs1 zu kompensieren. Diese Verarbeitungszeit des ersten Bildstroms ist beispielsweise größer als 30 ms.

Die Pixellichtanordnung 10 umfasst wenigstens eine nicht dargestellte Lichtquelle sowie eine nicht dargestellte Projektionsanordnung oder eine nicht dargestellte Reflexionsanordnung. Beispielsweise umfasst die Pixellichtanordnung 10 ein Mikrospiegelarray (Digital Micromirror Device: DMD), ein Liquid Crystal Display (LCD), eine Liquid-Crystal-on-Silicon (kurz LCoS)-Matrixanzeige, eine LED-Matrix usw. Grundsätzlich sind auch Laserscanner zur Realisierung der Pixellichtanordnung 10 geeignet. Folglich kann jede Lichtanordnung als Pixellichtanordnung 10 verwendet werden, welche ein hochaufgelöstes Bild in das Vorfeld des Kraftfahrzeugs projiziert.

Die ersten Fahrzeugdaten d1 umfassen beispielsweise eine Basiswinkeleinstellung des Scheinwerfers, welche genutzt wird, um die Ausrichtung einer optischen Achse der Beleuchtungseinrichtung 2 zu berechnen. Die Basiswinkeleinstellung ist eine optionale der ersten Berechnungseinheit 4 zuzuführende Größe. Sie stellt dabei einen Basiswinkel dar, welcher von einem anderen System zur Einstellung einer Sollwinkellage der optischen Achse der Beleuchtungseinrichtung 2 stammt, oder der sich in anderen Signalen abbildet. Beispielhaft sei eine manuelle Einstellung der Sollwinkellage der optischen Achse zur Kompensation von Beladungseinflüssen genannt. Des Weiteren können auch eine Fahrzeuggeschwindigkeit, eine Fahrzeugbeschleunigung oder andere Größen Teil der ersten Fahrzeugdaten d1 sein.

Der erste Bildstrom fs1 wird mit einer Bildrate, welche auch als Bildupdaterate bezeichenbar ist, von der ersten Berechnungseinheit 4 bereitgestellt. Der Korrekturwert c wird mit einer Korrekturrate, welche auch als Korrekturupdaterate bezeichenbar ist, von der zweiten Berechnungseinheit 6 bereitgestellt.

Figur 2 zeigt in schematischer Form ein Kraftfahrzeug 202, welches die Beleuchtungseinrichtung 2 umfasst. In Fahrtrichtung x wird die Abstrahllichtverteilung 12 als Abblendlichtverteilung abgestrahlt. Beispielhaft ist eine Ist-Winkellage θ einer optischen Achse 204 der Beleuchtungseinrichtung 2 zu einer Längsachse 206 des Kraftfahrzeugs 202 gezeigt. Die Winkellage θ wird beispielsweise mithilfe von Gyroskopsignalen relativ zu einer Fahrbahn 208, auf dem sich das Kraftfahrzeug 202 befindet, stabilisiert.

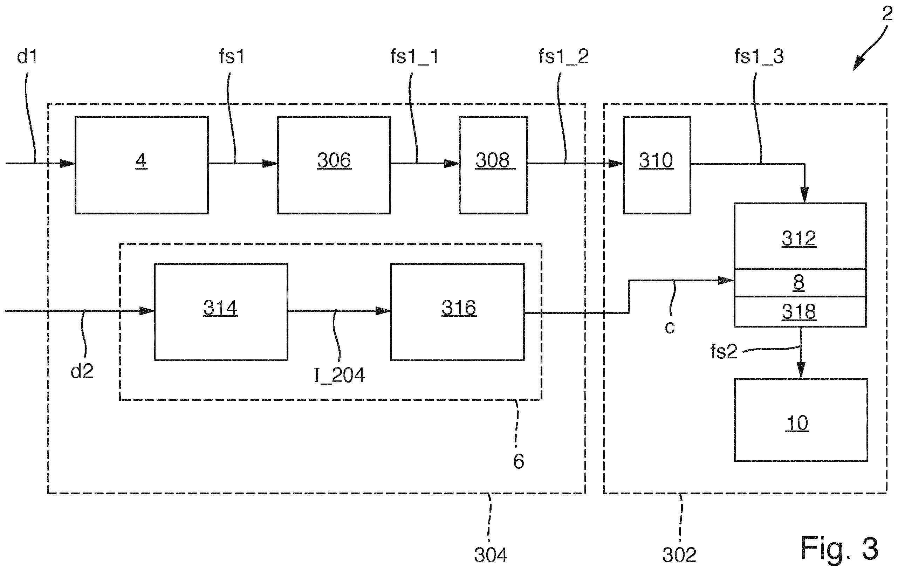

Figur 3 zeigt in schematischer Form die Beleuchtungseinrichtung 2 mit einem Pixellichtmodul 302 und einer Steuereinheit 304. Der erste Bildstrom fs1 wird in einem Bildspeicher 306 zwischengespeichert. Eine Schnittstelleneinheit 308 ruft einen Bildstrom fs1_1, d. h. eine Instanz des Bildstroms fs1, aus dem Bildspeicher 306 ab und übermittelt in Abhängigkeit davon einen Bildstrom fs1_2 an eine weitere Schnittstelleneinheit 310 des Pixellichtmoduls 302. In Abhängigkeit von dem zugeführten Bildstrom fs1_2 übermittelt die Schnittstelleneinheit 310 einen Bildstrom fs1_3 in einem Bildspeicher 312 des Pixellichtmoduls 302.

Die zweite Berechnungseinheit 6 umfasst eine dritte Berechnungseinheit 314, welche in Abhängigkeit von den zweiten Fahrzeugdaten d2 eine Information I 204 über Lage und Bewegung der optischen Achse der Beleuchtungseinrichtung 2 ermittelt. Der wenigstens eine Korrekturwert c wird mittels einer vierten Berechnungseinheit 316 in Abhängigkeit von der Information I_204 ermittelt. Dabei stellt der wenigstens eine Korrekturwert c eine Kompensation für die erhaltene Information I_204 über die Lage und Bewegung der optischen Achse dar. Umfasst die Information I_204 beispielsweise eine Bewegung der optischen Achse um +1° in vertikaler Richtung so bewirkt der Korrekturwert c eine Gegenbewegung für die Abstrahllichtverteilung um -1° in vertikaler Richtung.

Die Korrektureinheit 8 befindet sich zwischen einer Treibereinheit 318 und dem Bildspeicher 312 und ermittelt den zweiten Bildstrom fs2 in Abhängigkeit von dem wenigstens einen Korrekturwert c und in Abhängigkeit von dem ersten Bildstrom fs1, hier repräsentiert durch den Bildstrom fs1_3.

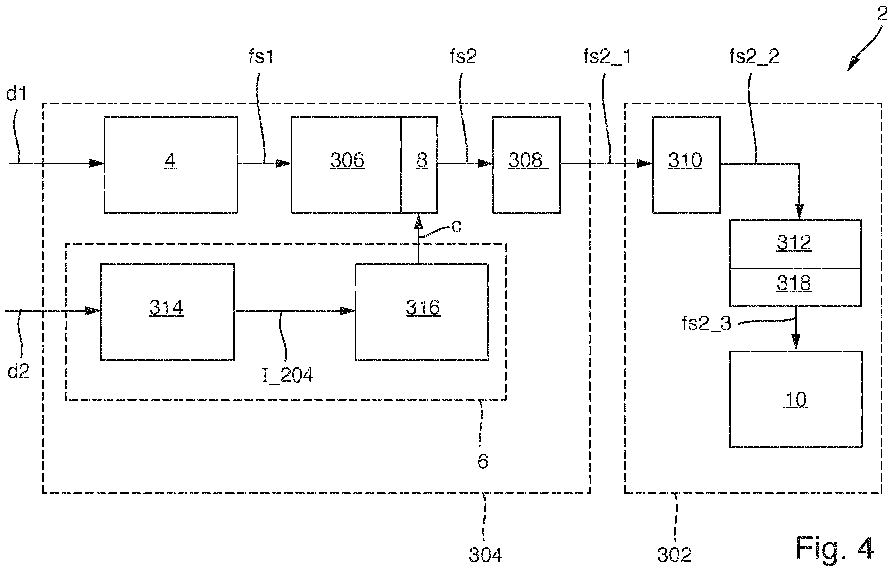

Figur 4 zeigt ein Beispiel der Beleuchtungseinrichtung 2. Im Unterschied zur Figur 3 befindet sich die Korrektureinheit 8 in der Steuereinheit 304 zwischen dem Bildspeicher 306 und der Schnittstelleneinheit 308. Folglich werden der zweite Bildstrom fs2 bzw. Instanzen des zweiten Bildstroms fs2 bis zu der Pixellichtanordnung 10 geleitet.

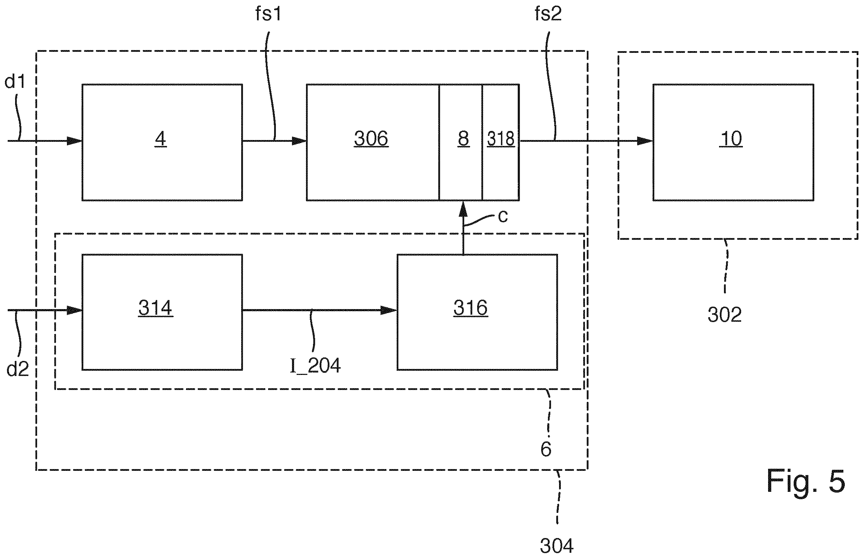

Figur 5 zeigt ein Beispiel der Beleuchtungseinrichtung 2. Im Unterschied zur Figur 4 ist die Treibereinheit 318 auf der Steuereinheit 304 angeordnet und übermittelt den zweiten Bildstrom fs2 direkt an die Pixellichtanordnung 10.

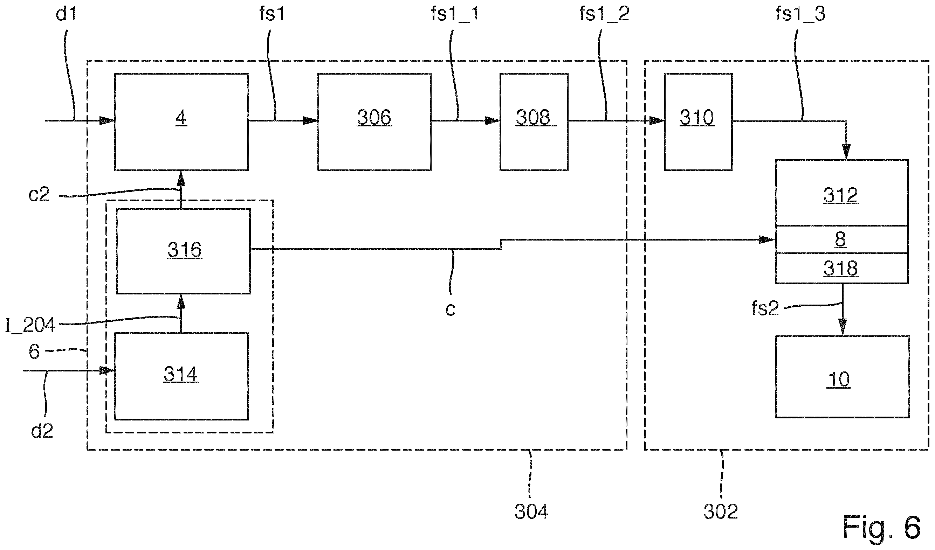

Figur 6 zeigt ein Beispiel der Beleuchtungseinrichtung 2. Im Unterschied zur Figur 3 ermittelt die Berechnungseinheit 316 nicht nur den wenigstens einen Korrekturwert c sondern einen zusätzlichen Vorkorrekturwert c2. Die erste Berechnungseinheit 4 zur Ermittlung des ersten Bildstroms fs1 ermittelt in Abhängigkeit von den ersten Fahrzeugdaten d1 und dem Vorkorrekturwert c2 den ersten Bildstrom fs1. Der Vorkorrekturwert c2 dient zur Vorkorrektur des ersten Bildstroms fs1 dahingehend, als dass die Berechnungseinheit 316 niederfrequente Stabilisierungen mittels des Vorkorrekturwerts c2 berücksichtigen kann. Höherfrequente Stabilisierungen werden über den Korrekturwert c und die Korrektureinheit 8 realisiert.

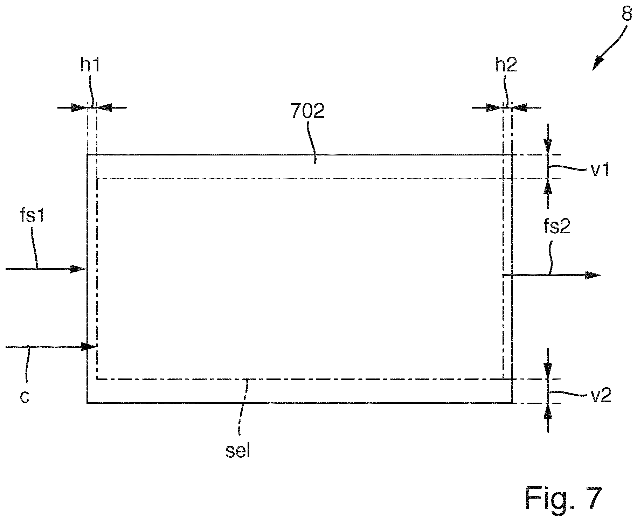

Figur 7 zeigt in schematischer Form die Arbeitsweise der Korrektureinheit 8. Die Korrektureinheit 8 empfängt den ersten Bildstrom fs1. In Abhängigkeit von dem Korrekturwert c ermittelt die Korrektureinheit 8 den Auswahlbereich sel in Bezug zu der Größe der Einzelbilder wie beispielsweise dem Einzelbild 702 des ersten Bildstroms fs1. Der Auswahlbereich sel hat beispielsweise eine feste Größe, welche einem erzeugten Bild auf einer Bildmatrix der Pixellichtanordnung entspricht. Der Korrekturfaktor c bestimmt die Lage des Auswahlbereichs sel in Bezug zu den jeweiligen Einzelbildern 702 des ersten Bildstroms fs1. Die Lage des Auswahlbereichs sel ist in der Figur beispielhaft mittig gewählt, kann aber selbstverständlich davon abweichen und beispielsweise eine Translation und/oder eine Rotation des Auswahlbereichs sel in Bezug zu den Einzelbildern bzw. dem Einzelbild 702 des ersten Bildstroms fs1 umfassen. Der Korrekturfaktor c umfasst beispielsweise Werte für die Translation und/oder die Rotation des Auswahlbereichs sel in Bezug zu dem Einzelbild 702 des ersten Bildstroms fs1. In Abhängigkeit von dem mittels des Korrekturfaktors c ermittelten Auswahlbereich sel werden Einzelbilder aus Einzelbildern des ersten Bildstroms fs1 ausgeschnitten und als Einzelbilder des zweiten Bildstroms fs2 bereitgestellt.

In vertikaler Richtung in Bezug zu der Fahrbahn des Kraftfahrzeugs ergeben sich bei der beispielhaft gezeigten mittigen und nicht verdrehten Ausrichtung des Auswahlbereichs sel vertikale Randbereiche v1 und v2, welche gemeinsam um 10-25 % größer sind als eine vertikale Ausdehnung des Auswahlbereichs sel. In horizontaler Richtung ergeben sich horizontale Randbereiche h1 und h2, welcher um 2-5 % größer sind als eine horizontale Ausdehnung des Auswahlbereichs sel. Die horizontale Ausdehnung der Einzelbilder des ersten und zweiten Bildstroms fs1, fs2 ist beispielhaft größer als die vertikale Ausdehnung. Die Randbereiche v1, v2, h1, h2 werden auch als dynamischer Bereich bezeichnet, der für schnelle Adaptionen zur Stabilisierung der Abstrahllichtverteilung zur Verfügung steht.

Der Auswahlbereich sel zur Projektion eines Symbols ist beispielsweise 5° des Abstrahlwinkels in horizontaler Richtung und 10° des Abstrahlwinkels in vertikaler Richtung.

Vorteilhaft wird der erste Bildstrom fs1 stets mit Einzelbildern berechnet, welche größer sind als der Auswahlbereich sel. So kann eine asynchrone und schnelle Kompensationen von Neigung und Rollbewegung um wenigstens eine der Fahrzeugachsen erfolgen, indem der Ursprung und/oder die Orientierung zur Ermittlung des Auswahlbereichs sel angepasst wird.

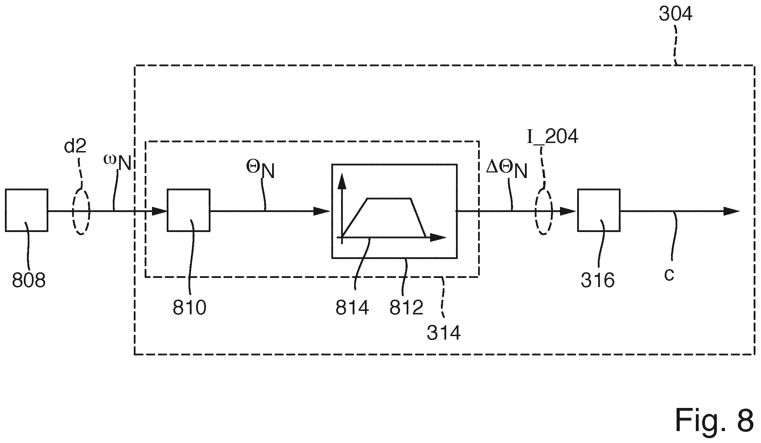

Figur 8 zeigt ein Blockdiagramm in schematischer Form. Aus Gründen der Übersichtlichkeit behandelt das schematische Blockdiagramm die Verwendung eines Ein-Achsen-MEMS-Gyroskops 808. Das im Folgenden erläuterte Schema gilt mit entsprechenden Anpassungen auch bei der Verwendung eines Zwei-Achsen-MEMS-Gyroskops und eines Drei-Achsen-MEMS-Gyroskops, welche bei entsprechender Verwendung das Ein-Achsen-MEMS-Gyroskop 808 innerhalb des Blockdiagramms ersetzen.

Das Ein-Achsen-MEMS-Gyroskop 808 stellt ein Winkelgeschwindigkeitssignal bereit, dass die Winkelgeschwindigkeit ωN um eine Fahrzeugachse beschreibt. Ein Integrator 810 führt eine Integration der Winkelgeschwindigkeit ωN über der Zeit durch und berechnet damit einen Winkel θN, der eine Istwinkellage θN der Fahrzeuglängsachse relativ zur Fahrbahn beschreibt. Anschließend erfolgt eine Filterung der Winkelsignale durch einen Filter 812, der beispielhaft durch einen Bandpass 814 realisiert werden kann. Hierbei werden unerwünschte Signale herausgefiltert, welche für eine falsche Einstellung des Scheinwerfers sorgen könnten. Diese unerwünschten Signale sind insbesondere hochfrequente Rauschanteile im Sensorsignal und niederfrequente Anteile im Sensorsignal, welche zum Beispiel durch einen Offsetfehler im Gyroskop verursacht werden. Der Filter erzeugt ein Winkelverschiebungssignal ΔθN. Die Berechnungseinheit 316 ermittelt in Abhängigkeit von dem Winkelverschiebungssignal AθN den Korrekturwert c zur Stabilisierung der Abstrahllichtverteilung.

## Patentansprüche

1. Eine Beleuchtungseinrichtung (2) für ein Kraftfahrzeug, wobei die Beleuchtungseinrichtung (2) eine erste Berechnungseinheit (4), eine zweite Berechnungseinheit (6) und eine Korrektureinheit (8) umfasst, wobei die Beleuchtungseinrichtung (2) so eingerichtet ist, dass die Beleuchtungseinrichtung (2)
einen ersten Bildstrom mit einer Bildrate in Abhängigkeit von ersten Fahrzeugdaten mittels der ersten Berechnungseinheit (4) ermittelt,
wenigstens einen Korrekturwert mit einer Korrekturrate, welche größer ist als die Bildrate, in Abhängigkeit von zweiten Fahrzeugdaten mittels der zweiten Berechnungseinheit (6) ermittelt, und
einen zweiten Bildstrom in Abhängigkeit von dem ermittelten ersten Bildstrom und in Abhängigkeit von dem wenigstens einen ermittelten Korrekturwert mittels der Korrektureinheit (8) ermittelt,
wobei die Beleuchtungseinrichtung (2) eine Pixellichtanordnung (10) umfasst,
**dadurch gekennzeichnet, dass**
die Beleuchtungseinrichtung (2) so eingerichtet ist, dass die Beleuchtungseinrichtung (2)
eine Abstrahllichtverteilung in Abhängigkeit von dem zweiten Bildstrom mittels der Pixellichtanordnung (10) von der Beleuchtungseinrichtung abstrahlt,
die Korrektureinheit (8)einen Auswahlbereich innerhalb jeweiliger Einzelbilder des ersten Bildstromes in Abhängigkeit von dem Korrekturwert selektiert, und
die selektierten Auswahlbereiche als jeweilige Einzelbilder des zweiten Bildstroms bereitstellt und
dass eine Bildauflösung des ersten Bildstroms größer ist als eine Bildauflösung des zweiten Bildstroms.

2. Die Beleuchtungseinrichtung (2) gemäß dem Anspruch 1, wobei die Einzelbilder des ersten Bildstroms in einer vertikalen Ausdehnung eine erste Differenz zu einer vertikalen Ausdehnung des Auswahlbereichs aufweisen, und wobei die Einzelbilder des ersten Bildstroms in einer horizontalen Ausdehnung eine zweite Differenz zu einer horizontalen Ausdehnung des Auswahlbereichs aufweisen, und wobei die erste Differenz größer ist als die zweite Differenz.

3. Die Beleuchtungseinrichtung (2) gemäß einem der vorigen Ansprüche, wobei die Einzelbilder des ersten Bildstroms in vertikaler Ausdehnung um 10 bis 25 % größer sind als der Auswahlbereich, und wobei die Bilder des ersten Bildstroms in horizontaler Ausdehnung um 2 bis 5 % größer sind als der Auswahlbereich.

4. Die Beleuchtungseinrichtung (2) gemäß einem der vorstehenden Ansprüche, wobei die Korrektureinheit (8) zwischen einem Bildspeicher für den ersten Bildstrom und einer Treibereinheit der Pixellichtanordnung (10) angeordnet ist.

5. Die Beleuchtungseinrichtung (2) gemäß einem der Ansprüche 1 bis 3, wobei die Korrektureinheit (8) zwischen einem Bildspeicher einer Steuereinheit und einer Datenausgangsschnittstelle der Steuereinheit angeordnet ist.

6. Die Beleuchtungseinrichtung (2) gemäß einem der vorigen Ansprüche, wobei die zweite Berechnungseinheit (6) einen Vorkorrekturwert ermittelt, und wobei die erste Berechnungseinheit (6) den ersten Bildstrom in Abhängigkeit von dem Vorkorrekturwert ermittelt.

7. Die Beleuchtungseinrichtung (2) gemäß einem der vorstehenden Ansprüche, wobei die ersten Fahrzeugdaten wenigstens eine der folgenden Größen umfasst: eine Fahrzeuggeschwindigkeit, eine Fahrzeugbeschleunigung, Objektinformationen, Adative Driving Beam-Informationen, einen Lenkradwinkel, eine manuelle Vorgabe der Leuchtweite oder andere Fahrzeuginformationen.

8. Die Beleuchtungseinrichtung (2) gemäß einem der vorstehenden Ansprüche, wobei die zweiten Fahrzeugdaten wenigstens eine der folgenden Größen umfasst: eine Winkelgeschwindigkeit, welche mittels eines Gyroskops oder mittels einer inertialen Messeinheit ermittelt wird, oder einen Winkel, welcher mittels des Gyrosops, der inertialen Messeinheit oder mittels Achssensoren ermittelt wird.

9. Ein Verfahren zum Betreiben einer Beleuchtungseinrichtung (2) eines Kraftfahrzeugs, wobei das Verfahren umfasst:
Ermitteln eines ersten Bildstroms mit einer Bildrate in Abhängigkeit von ersten Fahrzeugdaten mittels einer ersten Berechnungseinheit (4),
Ermitteln wenigstens eines Korrekturwerts mit einer Korrekturrate, welche größer ist als die Bildrate, in Abhängigkeit von zweiten Fahrzeugdaten mittels einer zweiten Berechnungseinheit (6), und
Ermitteln eines zweiten Bildstroms in Abhängigkeit von dem ermittelten ersten Bildstrom und in Abhängigkeit von dem wenigstens einen ermittelten Korrekturwert mittels einer Korrektureinheit (8),
**dadurch gekennzeichnet, dass** das Verfahren ferner umfasst:
Abstrahlen einer Abstrahllichtverteilung in Abhängigkeit von dem zweiten Bildstrom mittels einer Pixellichtanordnung (10) der Beleuchtungseinrichtung,
Selektieren eines Auswahlbereichs innerhalb jeweiliger Einzelbilder des ersten Bildstromes in Abhängigkeit von dem Korrekturwert und
Bereitstellen des selektierten Auswahlbereichs als jeweilige Einzelbilder des zweiten Bildstroms und
dass eine Bildauflösung des ersten Bildstroms größer ist als eine Bildauflösung des zweiten Bildstroms.

10. Das Verfahren gemäß dem Anspruch 9, wobei das Verfahren zum Betreiben der Beleuchtungseinrichtung (2) gemäß einem der Ansprüche 1 bis 8 ausgebildet ist.

## Claims

1. Illumination device (2) for a motor vehicle, the illumination device (2) comprising a first calculation unit (4), a second calculation unit (6) and a correction unit (8), the illumination device (2) being designed such that the illumination device (2)
determines a first image stream with a frame rate depending on first vehicle data by means of the first calculation unit (4),
determines at least one correction value with a correction rate which is greater than the frame rate depending on second vehicle data by means of the second calculation unit (6), and
determines a second image stream depending on the determined first image stream and depending on the at least one determined correction value by means of the correction unit (8),
the illumination device (2) comprising a pixel light arrangement (10),
**characterized in that**
the illumination device (2) is designed such that the illumination device (2)
emits an emission light distribution depending on the second image stream by means of the pixel light arrangement (10) of the illumination device,
the correction unit (8) selects a selection region within respective individual images of the first image stream depending on the correction value and provides the selected selection regions as respective individual images of the second image stream, and
**in that** an image resolution of the first image stream is greater than an image resolution of the second image stream.

2. Illumination device (2) according to claim 1, wherein the individual images of the first image stream have a first difference in a vertical extension to a vertical extension of the selection region, and wherein the individual images of the first image stream have a second difference in a horizontal extension to a horizontal extension of the selection region, and wherein the first difference is greater than the second difference.

3. Illumination device (2) according to any of the preceding claims, wherein the individual images of the first image stream are 10 to 25% larger than the selection region in the vertical extension, and wherein the images of the first image stream are 2 to 5% larger than the selection region in the horizontal extension.

4. Illumination device (2) according to any of the preceding claims, wherein the correction unit (8) is arranged between an image memory for the first image stream and a driver unit of the pixel light arrangement (10) .

5. Illumination device (2) according to any of claims 1 to 3, wherein the correction unit (8) is arranged between an image memory of a control unit and a data output interface of the control unit.

6. Illumination device (2) according to any of the preceding claims, wherein the second calculation unit (6) determines a pre-correction value, and wherein the first calculation unit (6) determines the first image stream depending on the pre-correction value.

7. Illumination device (2) according to any of the preceding claims, wherein the first vehicle data comprises at least one of the following variables: a vehicle speed, a vehicle acceleration, object information, adaptive driving beam information, a steering wheel angle, a manual specification of the headlight range or other vehicle information.

8. Illumination device (2) according to any of the preceding claims, wherein the second vehicle data comprises at least one of the following variables: an angular velocity, which is determined by means of a gyroscope or by means of an inertial measuring unit, or an angle, which is determined by means of the gyroscope, the inertial measuring unit or by means of axle sensors.

9. Method for operating an illumination device (2) of a motor vehicle, the method comprising:
determining a first image stream with an image rate depending on first vehicle data by means of a first calculation unit (4),
determining at least one correction value with a correction rate which is greater than the frame rate depending on second vehicle data by means of a second calculation unit (6), and
determining a second image stream depending on the determined first image stream and depending on the at least one determined correction value by means of a correction unit (8),
**characterized in that** the method further comprises:
emitting an emission light distribution depending on the second image stream by means of a pixel light arrangement (10) of the illumination device,
selecting a selection region within respective individual images of the first image stream depending on the correction value and
providing the selected selection region as respective individual images of the second image stream, and
**in that** an image resolution of the first image stream is greater than an image resolution of the second image stream.

10. Method according to claim 9, wherein the method for operating the illumination device (2) is configured according to any of claims 1 to 8.

## Revendications

1. Dispositif d'éclairage (2) pour véhicule automobile, dans lequel le dispositif d'éclairage (2) comprend une première unité de calcul (4), une seconde unité de calcul (6) et une unité de correction (8), dans lequel le dispositif d'éclairage (2) est conçu de façon telle que le dispositif d'éclairage (2)
détermine, au moyen de la première unité de calcul (4) et en fonction de premières données de véhicule, un premier flux d'images présentant une fréquence d'images,
détermine, au moyen de la seconde unité de calcul (6) et en fonction de secondes données de véhicule, au moins une valeur de correction présentant une fréquence de correction supérieure à la fréquence d'images, et
détermine, au moyen de l'unité de correction (8), un second flux d'images en fonction du premier flux d'images déterminé et en fonction de la valeur de correction déterminée, au moins au nombre de une,
dans lequel le dispositif d'éclairage (2) comprend un dispositif d'agencement lumineux multipixels (10),
**caractérisé en ce que**
le dispositif d'éclairage (2) est conçu de façon telle que le dispositif d'éclairage (2)
émet, au moyen du dispositif d'agencement lumineux multipixels (10) du dispositif d'éclairage, une répartition de lumière d'émission en fonction du second flux d'images,
l'unité de correction (8) sélectionne une région d'échantillonnage au sein d'images individuelles respectives du premier flux d'images en fonction de la valeur de correction, et
fournit les régions d'échantillonnage sélectionnées sous la forme d'images individuelles respectives du second flux d'images et
**en ce qu'**une résolution d'image du premier flux d'images est supérieure à une résolution d'image du second flux d'images.

2. Dispositif d'éclairage (2) selon la revendication 1, dans lequel les images individuelles du premier flux d'images présentent dans une extension verticale une première différence par rapport à une extension verticale de la région d'échantillonnage, et dans lequel les images individuelles du premier flux d'images dans une extension horizontale présentent une seconde différence par rapport à une extension horizontale de la région d'échantillonnage, et dans lequel la première différence est supérieure à la seconde différence.

3. Dispositif d'éclairage (2) selon l'une des revendications précédentes, dans lequel les images individuelles du premier flux d'images en extension verticale sont 10 à 25 % plus grandes que celles de la région d'échantillonnage, et dans lequel les images individuelles du premier flux d'images en extension horizontale sont 2 à 5 % plus grandes que celles de la région d'échantillonnage.

4. Dispositif d'éclairage (2) selon l'une des revendications précédentes, dans lequel l'unité de correction (8) est agencée entre une mémoire d'imagerie destinée au premier flux d'images et une unité de pilotage du dispositif d'agencement lumineux multipixels (10).

5. Dispositif d'éclairage (2) selon l'une des revendications 1 à 3, dans lequel l'unité de correction (8) est agencée entre une mémoire d'imagerie d'une unité de commande et une interface de sortie de données de l'unité de commande.

6. Dispositif d'éclairage (2) selon l'une des revendications précédentes, dans lequel la seconde unité de calcul (6) détermine une valeur de précorrection, et dans lequel la première unité de calcul (6) détermine le premier flux d'images en fonction de la valeur de précorrection.

7. Dispositif d'éclairage (2) selon l'une des revendications précédentes, dans lequel les premières données de véhicule comprennent au moins l'une des grandeurs ci-après: une vitesse de véhicule, une accélération de véhicule, des informations d'objet, des informations de faisceau de phare adaptatif, un angle de volant de direction, un réglage manuel de la portée des phares ou d'autres informations de véhicule.

8. Dispositif d'éclairage (2) selon l'une des revendications précédentes, dans lequel les secondes données de véhicule comprennent au moins l'une des grandeurs ci-après: une vitesse angulaire déterminée au moyen d'un gyroscope ou au moyen d'une centrale inertielle, ou un angle déterminé au moyen du gyroscope, de la centrale inertielle ou au moyen de capteurs d'essieu.

9. Procédé de fonctionnement d'un dispositif d'éclairage (2) d'un véhicule automobile, dans lequel le procédé comprend les étapes consistant à:
déterminer, au moyen d'une première unité de calcul (4) et en fonction de premières données de véhicule, un premier flux d'images présentant une fréquence d'images,
déterminer, au moyen d'une seconde unité de calcul (6) et en fonction de secondes données de véhicule, au moins une valeur de correction présentant une fréquence de correction supérieure à la fréquence d'images, et
déterminer, au moyen d'une unité de correction (8), un second flux d'images en fonction du premier flux d'images déterminé et en fonction de la valeur de correction déterminée, au moins au nombre de une,
**caractérisé en ce que** le procédé comprend en outre les étapes consistant à:
émettre, au moyen d'un dispositif d'agencement lumineux multipixels (10) du dispositif d'éclairage, une répartition de lumière d'émission en fonction du second flux d'images,
sélectionner une région d'échantillonnage à l'intérieur d'images individuelles respectives du premier flux d'images en fonction de la valeur de correction, et
fournir la région d'échantillonnage sélectionnée sous forme d'images individuelles respectives du second flux d'images, et
**en ce qu'**une résolution d'image du premier flux d'images est supérieure à une résolution d'image du second flux d'images.

10. Procédé selon la revendication 9, dans lequel le procédé de fonctionnement du dispositif d'éclairage (2) est mis en œuvre selon l'une quelconque des revendications 1 à 8.
